# EUROPÄISCHE PATENTSCHRIFT

(11) **EP 0 952 655 B1**
(45) Veröffentlichungstag und Bekanntmachung des Hinweises auf die Patenterteilung: **22.08.2007**
(21) Anmeldenummer: 99810197.6
(22) Anmeldetag: 05.03.1999
(51) Int. Cl.: H02K 3/16, H02K 3/487

(54) **Elektrische Maschine mit einem mit Dämpferstäben versehenen Rotor**
Electric machine with rotor provided with amortisseur bars
Machine électrique avec rotor muni de barres d'amortisseur

(30) Priorität: 23.04.1998 DE 19818150
(43) Veröffentlichungstag der Anmeldung: 27.10.1999
(73) Patentinhaber: Alstom Technology Ltd, 5400 Baden (CH)
(72) Erfinder: Brem, Ernst, 8952 Schlieren (CH); Tommer, Josef, 5436 Würen Los (CH)

(56) Entgegenhaltungen:
- DE-A- 1 463 872
- DE-A- 1 918 859
- US-A- 3 246 188
- US-A- 5 606 211

## Beschreibung

### TECHNISCHES GEBIET

Die vorliegende Erfindung bezieht sich auf das Gebiet der elektrischen Maschinen. Sie betrifft eine elektrische Maschine, insbesondere Generator, umfassend einen Rotor mit Polzonen, in welchen Polzonen als Keile ausgebildete Dämpferstäbe angeordnet sind, die auf der Aussenseite des Rotors in dafür vorgesehene, in Längsrichtung verlaufende Nuten eingeschoben sind und gegen die beim schnellen Drehen des Rotors auftretenden Fliehkräfte durch Abstützmittel in den Nuten gehalten werden, und die an den Enden des Rotors durch einen Dämpferring bzw. Dämpfersegmente, welche den Rotor ringförmig bzw. ringabschnittförmig umschliessen, untereinander elektrisch leitend verbunden sind.

Eine solche elektrische Maschine ist z.B. aus der Druckschrift US-A-4,363,986 bekannt.

### STAND DER TECHNIK

In den Rotoren elektrischer Maschinen werden aus verschiedenen Gründen Dämpferstäbe ("amortisseur windings") eingesetzt. Anordnung und Funktion derartiger Dämpferstäbe werden beispielsweise in den Druckschriften US-A-4,453,101, US-A-5,122,698 oder US-A-5,606,211 erläutert. Die Dämpferstäbe können dabei in den Wicklungsnuten zwischen den Wicklungsstäben und den Verschlusskeilen angeordnet sein, wie dies in der US-A-5,122,698 gezeigt ist. Sie können aber auch als Verschlusskeile von Wicklungsnuten ausgebildet sein, wie dies in der US-A-5,606,211 dargestellt ist. Die Dämpferstäbe werden an ihren Enden elektrisch durch über den Rotor geschobene Dämpferringe bzw. Dämpfersegmente miteinander verbunden.

US 3,246,188 offenbart die Anordnung von Dämpferstäben in Rotomuten oder Öffnungen einer elektrischen Maschine, wobei thermisch bedingte axiale Bewegungen der Stäbe ermöglicht sind.

Eine spezielle Anwendung der Dämpferstäbe bezieht sich auf die Polzonen von Rotoren. In den Polzonen, in denen keine Wicklungsstäbe vorhanden sind, sind für die Aufnahme der Dämpferstäbe spezielle Nuten mit geringer Tiefe vorgesehen, in welche die Dämpferstäbe ohne Verwendung der üblichen Nutkeile eingelegt oder eingeschoben werden (US-A-4,363,986). Damit die Dämpferstäbe durch die bei den hohen Drehzahlen während des Betriebes auftretenden Fliehkräfte sicher in den Nuten gehalten werden, müssen spezielle Vorkehrungen getroffen werden. Dies kann durch oberhalb der Dämpferstäbe in die Nuten eingeschobene Verschlusskeile erreicht werden (US-A-5,122,698). Dies kann aber auch durch auf den Rotor aufgeschrumpfte Halteringe erreicht werden (US-A-4,363,986). Schliesslich ist es aber auch möglich, die Dämpferstäbe selbst nach Art der Verschlusskeile auszubilden (US-A-5,606,211).

In DE 1918859 wird eine Vorrichtung für Wicklungsstäbe in einem Ständer (Stator) offenbart mit zweiteiligen Keil und einem elastischen Teil zwischen den beiden Keilteilen, das mittels einer Schraube zwischen Keil und Wicklungsstab eine Vorspannung erzeugt.

In allen Fällen ist zu berücksichtigen, dass die Dämpferstäbe über eine grössere Rotorlänge in die Nuten eingeschoben und dort gesichert werden müssen. Um das Einschieben bei der Montage nicht unnötig zu erschweren, wird ein ausreichendes Spiel zwischen den Dämpferstäben bzw. Verschlusskeilen und den Nuten vorgesehen. Dies führt einerseits dazu, dass die Dämpferstäbe bei kleinen Drehzahlen oder Stillstand der Maschine nur lose in den dafür vorgesehenen Nuten liegen und zum Klappern neigen. Dies hat andererseits aber insbesondere auch zur Folge, dass bei kleinen Drehzahlen oder Stillstand der Maschine der elektrische Kontakt zwischen den Enden der Dämpferstäbe und den darüberliegenden Dämpferringen bzw. -segmenten, aber auch zwischen den Dämpferstäben und dem Rotoreisen, aufgrund des fehlenden Kontaktdruckes entweder gar nicht oder nur ungenügend vorhanden ist, so dass es bei Strombelastung der Dämpferstäbe zu Anbrennungen kommen kann. Bei den hohen Drehzahlen des Normalbetriebs werden die Dämpferstäbe und Verschlusskeile dagegen durch die entstehenden Fliehkräfte nach aussen gedrückt und durch die entsprechende Keilform der Nuten fixiert, so dass das Spiel aufgehoben und gleichzeitig ein ausreichender Kontakt zu den Dämpferringen bzw. -segmenten und dem Rotoreisen hergestellt wird und gewährleistet ist.

Um die nachteiligen Wirkungen des mechanischen Spiels beim Stillstand oder bei kleinen Drehzahlen der Maschine zu vermeiden, ist in der US-A-5,122,698 vorgeschlagen worden, unterhalb der Dämpferstäbe in die Nut in Querrichtung gebogene Federstreifen einzulegen, welche den Dämpferstab (und den darüberliegenden Verschlusskeil) gegen die Schrägen in den Seitenwänden der Nut pressen und gleichzeitig die herausstehenden Enden der Dämpferstäbe gegen den Dämpferring drücken. Durch die eingelegten Federstreifen ergeben sich jedoch bereits bei der Montage sehr hohe Reibungskräfte beim Einschieben des Verschlusskeils, so dass bei dieser Lösung eine spezielle Hebelmechanik für das Einschieben verwendet werden muss (Fig. 6 in US-A-5,122,698) und eine leichte Montierbarkeit von Hand nicht mehr gegeben ist.

### DARSTELLUNG DER ERFINDUNG

Es ist daher Aufgabe der Erfindung, eine elektrische Maschine der eingangs genannten Art so zu verbessern, das bei den im Rotor vorgesehenen Dämpferstäben gleichzeitig eine leichte Montierbarkeit und ein ausreichender Anpressdruck der Dämpferstäbe auch bei Stillstand oder kleinen Drehzahlen der Maschine erreicht wird.

Die Aufgabe wird bei einer Maschine der eingangs genannten Art mit den Merkmalen des Anspruchs 1 gelöst Der Kern der Erfindung besteht darin, die Dämpferstäbe mittels Federelementen auch bei Stillstand der Maschine durch Beaufschlagung mit einem ausreichenden Anpressdruck in den Nuten zu fixieren und mit dem Dämpferring elektrisch zu verbinden. Die Federelemente sind dabei vorspannbar ausgebildet. Für das Montieren (Einschieben) der Dämpferstäbe werden die Federelemente so vorgespannt (bzw. zusammengedrückt), dass sie beim Einschieben der Dämpferstäbe keine zusätzlichen Reibungskräfte erzeugen. Ist der Dämpferstab montiert (eingeschoben), wird die Vorspannung weggenommen und die Federelemente dehnen sich zwischen der Unterseite des Dämpferstabes und dem Boden der Nut aus und pressen den Dämpferstab radial nach aussen in den Keilsitz der Nut bzw. gegen den Dämpferring. Zudem ist die Erfindung dadurch gekennzeichnet, dass die Dämpferstäbe jeweils eine Mehrzahl von Durchgangsbohrungen aufweisen, dass die Federelemente jeweils in einer der Durchgangsbohrungen fixiert und durch diese Durchgangsbohrung vorspannbar sind, dass jedes Fe-derelement eine Spannhülse mit einem Innengewinde aufweist, welche Spannhülse in die zugehörige Durchgangsbohrung im Dämpferstab hineinreicht und so das Federelement am Dämpferstab fixiert, und mittels welcher Spannhülse das Federelement gegen die Federkraft an die Unterseite des Dämpferstabes gepresst und damit vorgespannt werden kann.

Grundsätzlich wäre es denkbar, die Federelemente in den Dämpferstäben versenkt anzuordnen. Dies hätte den Vorteil, dass die Nuten zur Aufnahme der Dämpferstäbe in ihrer Querschnittsform unverändert beibehalten werden könnten. Jedoch würde eine solche versenkte Anordnung zu einer lokalen Querschnittsverringerung der Dämpferstäbe und damit zu einer unerwünschten Erhöhung des elektrischen Widerstands führen. Um dies zu vermeiden, ist gemäss einer ersten bevorzugten Ausführungsform der Erfindung die Unterseite der Dämpferstäbe eben ausgebildet, und zur Aufnahme der Federelemente unterhalb der Dämpferstäbe in den Nuten jeweils ein spaltförmiger Zwischenraum vorgesehen.

Eine zweite bevorzugte Ausführungsform der erfindungsgemässen Maschine zeichnet sich dadurch aus, dass die einzelnen Federelemente am jeweiligen Dämpferstab fixiert sind. Dadurch können die Federelemente zusammen mit dem Dämpferstab ohne Probleme in die Nut eingeschoben werden und sind auch im späteren Betrieb gegen ein Verrutschen gesichert.

Eine bevorzugte Weiterbildung dieser Ausführungsform ist dadurch gekennzeichnet, dass zum Vorspannen der Federelemente jeweils ein Spannbolzen vorgesehen ist, welcher Spannbolzen durch die jeweilige Durchgangsbohrung hindurch mit einem Bolzengewinde in die Spannhülse des vorzuspannenden Federelementes eingeschraubt wird. Der Spannbolzen spannt auf einfache Weise die Federelemente vor und sichert sie beim Einschieben des Dämpferstabes gegen ein Verrutschen. Ist der Dämpferstab eingeschoben, werden die Spannbolzen einfach gelöst oder herausgeschraubt. Die Federelemente sind so aktiviert und drücken dem Dämpferstab in die Nut, während sie durch die Spannhülsen weiterhin fixiert bleiben.

Bevorzugt sind dabei die Federelemente als blatt- oder tellerförmige Federn ausgebildet.

### KURZE ERLÄUTERUNG DER FIGUREN

Die Erfindung soll nachfolgend anhand von Ausführungsbeispielen im Zusammenhang mit der Zeichnung näher erläutert werden. Es zeigen
- Fig. 1: im Längsschnitt (entlang der Ebene B-B aus Fig. 3) einen Ausschnitt einer elektrischen Maschine gemäss einem bevorzugten Ausführungsbeispiel der Erfindung;
- Fig. 2: den rechten Teil der Fig. 1 in einer vergrösserten Darstellung; und
- Fig. 3: den Querschnitt entlang der Ebene A-A in Fig :1, wobei das Federelement noch mittels eines Spannbolzens vorgespannt ist.

### WEGE ZUR AUSFÜHRUNG DER ERFINDUNG

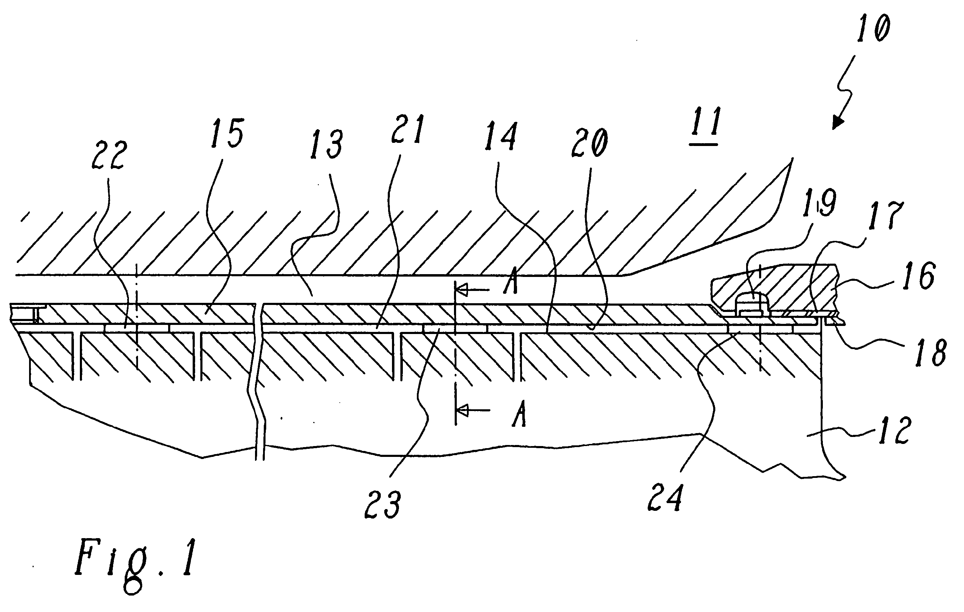

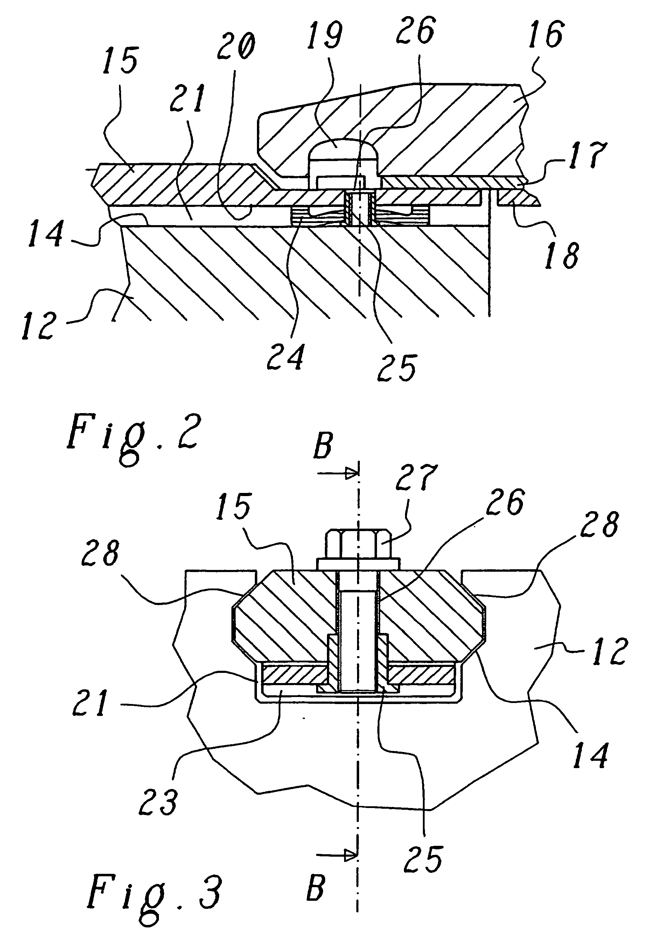

In Fig. 1 ist im Längsschnitt ein Ausschnitt einer elektrischen Maschine gemäss einem bevorzugten Ausführungsbeispiel der Erfindung wiedergegeben. Von der elektrischen Maschine 10, die insbesondere ein Generator sein kann, ist hier nur die innere Begrenzung des Stators 11 und ein Teil des Rotors 12 zu sehen, der innerhalb des Stators 11 mit einem Luftspalt 13 drehbar gelagert ist und (in einer Polzone) einen exemplarischen Dämpferstab 15 enthält. Die (nicht eingezeichnete) Rotationsachse verläuft in Fig. 1 horizontal. Der Dämpferstab 15 ist von der Seite her mit Spiel in eine im Rotor 12 eingelassene, parallel zur Rotationsachse verlaufende Nut 14 eingeschoben. Wie aus dem Querschnitt in Fig. 3 erkennbar ist, ist der Dämpferstab wie ein Verschlusskeil ausgebildet, der sich bei Auftreten radial nach aussen gerichteter Kräfte (Flieh- und/oder Federkräfte) mit schräg nach innen verlaufenden Seiten an entsprechenden Schrägen 28 in der Nut 14 zentrierend und fixierend abstützt.

Die Dämpferstäbe 15 haben eine ebene Unterseite. Unterhalb des Dämpferstabes 15 ist in der Nut 14 ein spaltförmiger Zwischenraum 21 (mit rechteckigem Querschnitt) vorgesehen, der zur Aufnahme einer Mehrzahl von über die Stablänge verteilt angeordneten Federelementen 22, 23 und 24 dient. Die Federelemente 22, 23 und 24 sind in Fig. 1 nur als Rechtecke angedeutet. Ihre beispielhafte Gestaltung ist aus der vergrösserten Darstellung in Fig. 2 und Fig. 3 entnehmbar. Die Federelemente 22, 23 und 24 stützen sich auf dem Boden der Nut 14 bzw. des Zwischenraumes 21 ab und beaufschlagen den Dämpferstab 15 von der Unterseite her mit Federkräften, die den Dämpferstab 15 über den grössten Teil seiner Länge gegen die Schrägen 28 der Nut 14 drücken. Der Dämpferstab 15 ist damit - auch wenn keine oder nur geringe Fliehkräfte vorliegen, d.h. bei Stillstand oder kleinen Drehzahlen der Maschine 10 - in der Nut spielfrei fixiert und hat über seine gesamte Länge elektrischen Kontakt mit dem Eisen des Rotors 12.

Eine besondere Situation ergibt sich am Ende des Dämpferstabes 15 (rechte Seite in Fig. 1). In dem Bereich, wo eine Rotorkappe 16 das Ende des Rotors 12 umschliesst, öffnet sich die Nut 14, und der Dämpferstab 15 erstreckt sich mit einem abgeflachten Ende bis unter die Rotorkappe 16. Unterhalb der Rotorkappe 16 wird der Dämpferstab 15 von innen gegen einen Dämpferring 18 bzw. gegen ein am Dämpferring 18 befestigtes, ringabschnittförmig ausgebildetes Dämpfersegment 17 gepresst, welches mehrere nebeneinanderliegende Dämpferstäbe an ihren Enden elektrisch leitend miteinander verbindet. Die Dämpfersegmente 17 und der Dämpferring 18 sind mittels einer Nut in der Rotorkappe 16 relativ zur Rotorkappe 16 fixiert. Im Bereich der übergreifenden Rotorkappe 16 ist unterhalb des Dämpferstabes 15 das Federelement 24 angeordnet. Während die im Mittelbereich des Dämpferstabes 15 liegenden Federelemente 22, 23 den Dämpferstab 15 in die Nut pressen, hat das Federelement 24 die spezielle Aufgabe, das flache Ende des Dämpferstabes 15 gegen das darüberliegende Dämpfersegment 17 zu pressen und so unter allen Betriebsbedingungen einen guten elektrischen Kontakt zwischen Dämpferstab 15 und Dämpfersegment 17 zu gewährleisten.

Die Federelemente 22, 23, 24 selbst sind vorzugsweise - wie dies aus Fig. 2 und 3 deutlich wird - als auf Biegung beanspruchte (rechteckige) Blatt- oder (runde) Tellerfedern ausgebildet. Sie weisen jeweils ein zentrales Loch auf, durch welches zum Vorspannen eine Spannhülse 25 gesteckt ist. Zum Fixieren der Federelemente 22-24 am Dämpferstab 15 und zum Vorspannen der Federelemente sind im Dämpferstab 15 an den dafür vorgesehenen Stellen senkrechte Durchgangsbohrungen 26 angebracht. Die Spannhülsen 25 der Federelemente 22-24 stecken mit einer Teillänge in den Durchgangsbohrungen 26 uns sichern so die Federelemente 22-24 gegen ein Verrutschen. Zugleich kann durch die Durchgangsbohrungen 26 gemäss Fig. 3 von oben ein mit einem Bolzengewinde ausgestatteter Spannbolzen 27 gesteckt und in die mit einem passenden Innengewinde versehene Spannhülse 25 eingeschraubt werden. Der Spannbolzen 27, der sich auf der Oberseite des Dämpferstabes 15 abstützt, zieht beim Einschrauben die Spannhülse 25 in die Durchgangsbohrung 26, wobei die Spannhülse 25 mit einer umlaufenden Schulter hinter das Federelement greift und dieses vorspannt.

Im vorgespannten Zustand (Fig. 3) ist das Federelement 23 eng an die Unterseite des Dämpferstabes 15 gepresst, so dass zum Boden der Nut 14 bzw. des Zwischenraums 21 hin ausreichendes Spiel bleibt. Der Dämpferstab 15 kann so zusammen mit den vorgespannten (zusammengedrückten) Federelementen 22-24 ohne Mühe mit der Hand in die Nut 14 eingeschoben werden. Sitzt dann der Dämpferstab 15 an seinem endgültigen Platz in der Nut 14, werden die Spannbolzen 27 gelockert bzw. ganz ausgeschraubt. Die Federelemente 22-24 entspannen sich dann in den Zwischenraum 21 und beaufschlagen unter Abstützen auf dem Boden der Nut 14 den Dämpferstab 15 von unten mit einer Federkraft bzw. Federspannung (Fig. 2), die den Dämpferstab auch bei Stillstand oder kleinen Drehzahlen der Maschine gegen Klappern sichert und einen guten elektrischen Kontoakt zwischen Dämpferstab 15 und Rotoreisen bzw. dem Dämpfersegment 18 gewährleistet.

Insgesamt ergibt sich mit der Erfindung eine elektrische Maschine, bei welcher die im Rotor eingesetzten Dämpferstäbe auch bei Stillstand und kleinen Drehzahlen sicher fixiert und kontaktiert sind, und die Dämpferstäbe dennoch bei der Montage ohne Zusatzmittel einfach in die dafür vorgesehenen Nuten eingeschoben werden können.

### BEZUGSZEICHENLISTE

- 10: elektrische Maschine (Generator)
- 11: Stator
- 12: Rotor
- 13: Luftspalt (Stator-Rotor)
- 14: Nut
- 15: Dämpferstab
- 16: Rotorkappe
- 17: Dämpfersegment
- 18: Dämpferring
- 19: Nut
- 20: Unterseite (Dämpferstab)
- 21: Zwischenraum
- 22,23,24: Federelement
- 25: Spannhülse
- 26: Durchgangsbohrung
- 27: Spannbolzen
- 28: Schräge

## Patentansprüche

1. Elektrische Maschine (10), umfassend einen Rotor (12) mit Polzonen, in welchen Polzonen als Keile ausgebildete Dämpferstäbe (15) angeordnet sind, die auf der Aussenseite des Rotors (12) in dafür vorgesehene, in Längsrichtung verlaufende Nuten (14) eingeschoben sind und gegen die beim schnellen Drehen des Rotors (12) auftretenden Fliehkräfte durch Abstützmittel (28) in den Nuten (14) gehalten werden, und die an den Enden des Rotors (12) durch einen Dämpferring (18) bzw. Dämpfersegmente (17), die den Rotor (12) ringförmig bzw. ringabschnittförmig umschliessen, untereinander elektrisch leitend verbunden sind, **dadurch gekennzeichnet, dass** auf der Unterseite der Dämpferstäbe (15) vorspannbare Federelemente (22, 23, 24) verteilt angeordnet sind, die im vorgespannten Zustand ein ungehindertes Einschieben der Dämpferstäbe (15) in die Nuten (14) ermöglichen und nach Beseitigung der Vorspannung die Federelemente sich zwischen der Unterseite der Dämpferstäbe (15) und dem Boden der Nuten (14) ausdehnen und die Dämpferstäbe radial nach aussen gegen die Abstützmittel (28) und an den Enden des Rotors (12) radial nach aussen gegen die Dämpferringe (18) bzw. Dämpfersegmente (17) drücken, und jedes Federelement (22, 23, 24) eine Spannhülse (25) mit einem Innengewinde aufweist, welche Spannhülse (25) in die zugehörige Durchgangsbohrung (26) im Dämpferstab (15) hineinreicht und so das Federelement (22, 23, 24) am Dämpferstab (15) fixiert, und mittels welcher Spannhülse (25) das Federelement (22, 23, 24) gegen die Federkraft an die Unterseite des Dämpferstabes (15) gepresst und damit vorgespannt werden kann.

2. Elektrische Maschine (10) nach Anspruch 1
**dadurch gekennzeichnet, dass**
zum Vorspannen der Federelemente (22, 23, 24) jeweils ein Spannbolzen (27) vorgesehen ist, welcher Spannbolzen (27) durch die jeweilige Durchgangsbohrung (26) hindurch mit einem Bolzengewinde in die Spannhülse (25) des vorzuspannenden Federelementes (22, 23, 24) eingeschraubt wird.

3. Elektrische Maschine (10) nach Anspruch 1 oder 2
**dadurch gekennzeichnet, dass**
die Federelemente (22, 23, 24) als blatt- oder tellerförmige Federn ausgebildet sind.

4. Elektrische Maschine (10) nach einem der Ansprüche 1 bis 3
**dadurch gekennzeichnet, dass**
die elektrische Maschine ein Generator ist.

## Claims

1. Electrical machine (10), comprising a rotor (12) with pole zones, in which pole zones amortisseur bars (15) designed as wedges are arranged, which amortisseur bars (15), on the outside of the rotor (12), are pushed into slots (14) provided for this purpose and running in the longitudinal direction and are held in the slots (14) by supporting means (28) against the centrifugal forces occurring during rapid rotation of the rotor (12) and which are connected to one another in an electrically conductive manner at the ends of the rotor (12) by an amortisseur ring (18) or amortisseur segments (17), which enclose the rotor (12) in an annular or ring-section-shaped manner, **characterized in that** prestressable spring elements (22, 23, 24) are arranged in a distributed manner on the underside of the amortisseur bars (15), which spring elements (22, 23, 24), in the prestressed state, enable the amortisseur bars (15) to be pushed into the slots (14) without hindrance and, after the prestressing has been removed, the spring elements expand between the underside of the amortisseur bars (15) and the base of the slots (14) and press the amortisseur bars (15) radially outward against the supporting means (28) and at the ends of the rotor (12) radially outward against the amortisseur rings (18) or amortisseur segments (17), and each spring element (22, 23, 24) has a clamping sleeve (25) with an internal thread, which clamping sleeve (25) reaches into the associated through-hole (26) in the amortisseur bar (15) and thus fixes the spring element (22, 23, 24) to the amortisseur bar, and by means of which clamping sleeve (25) the spring element (22, 23, 24) can be pressed against the underside of the amortisseur bar (15) against the spring force and can thus be prestressed.

2. Electrical machine (10) according to Claim 1, **characterized in that** a clamping bolt (27) is provided in each case in order to prestress the spring elements (22, 23, 24), which clamping bolt (27) is screwed with a male thread through the respective through-hole (26) into the clamping sleeve (25) of the spring element (22, 23, 24) to be prestressed.

3. Electrical machine (10) according to Claim 1 or 2, **characterized in that** the spring elements (22, 23, 24) are designed as leaf- or disk-shaped springs.

4. Electrical machine (10) according to one of Claims 1 to 3, **characterized in that** the electrical machine is a generator.

## Revendications

1. Machine électrique (10) qui comprend un rotor (12) doté de zones polaires dans lesquelles des barreaux d'amortissement (15) configurés en biseau sont enfoncés sur le côté extérieur du rotor (12) dans des rainures (14) prévues dans ce but et orientées dans le sens de la longueur, sont maintenus dans les rainures (14) par des moyens de soutien (28) en opposition à la force centrifuge exercée lors d'une rotation rapide du rotor (12) et sont reliés électriquement les uns aux autres aux extrémités du rotor (12) par un anneau d'amortissement (18) ou des segments d'amortissement (17) qui entourent le rotor (12) en forme d'anneau ou en forme de secteurs annulaires, **caractérisée en ce que** des éléments de ressort précontraints (22, 23, 24) sont répartis sur le côté inférieur des barreaux d'amortissement (15) et permettent à l'état précontraint d'insérer sans obstacle les barreaux d'amortissement (15) dans les rainures (14), tandis que lorsque la précontrainte est éliminée, les éléments élastiques se dilatent entre le côté inférieur des barreaux d'amortissement (15) et le fond des rainures (14) et repoussent les barreaux d'amortissement radialement vers l'extérieur contre les moyens d'appui (28) et, aux extrémités du rotor (12), le repoussent radialement vers l'extérieur contre les anneaux d'amortissement (18) ou segments d'amortissement (17), chaque élément de ressort (22, 23, 24) présentant une douille de serrage (25) dotée d'un filet intérieur, laquelle douille de serrage (25) s'enfonce dans la perforation associée (26) ménagée dans le barreau d'amortissement (15) et fixe ainsi l'élément de ressort (22, 23, 24) sur le barreau d'amortissement (15), la douille d'amortissement (25) permettant de repousser et donc de précontraindre l'élément de ressort (22, 23, 24) contre le côté inférieur du barreau d'amortissement (15) en opposition à sa force élastique.

2. Machine électrique (10) selon la revendication 1, **caractérisée en ce qu'**un boulon de serrage (27) est prévu pour précontraindre les éléments de ressort (22, 23, 24), ce boulon de serrage (27) étant passé dans la perforation (26) et vissé par son filet dans la douille de serrage (25) de l'élément de ressort (22, 23, 24) à précontraindre.

3. Machine électrique (10) selon les revendication 1 ou 2, **caractérisée en ce que** les éléments de ressort (22, 23, 24) sont configurés comme ressorts en lame ou en plateau.

4. Machine électrique (10) selon l'une des revendications 1 à 3, **caractérisée en ce que** la machine électrique est une génératrice.
